# EUROPEAN PATENT APPLICATION

(11) **EP 4 321 573 A1**
(43) Date of publication of application: **14.02.2024**
(21) Application number: 22189532.9
(22) Date of filing: 09.08.2022
(51) Int. Cl.: C08K 5/098, C08K 5/31, C08K 5/3465

(54) **COMBINATION OF CATALYTIC COMPONENTS**

(71) Applicant: PolyU GmbH, 46147 Oberhausen (DE)
(72) Inventor: Wiesinger, Jan-Phillip, 46147 Oberhausen (DE); Szopinski, Daniel, 46147 Oberhausen (DE); Radebner, Judith, 46147 Oberhausen (DE); Klein, Johann, 46147 Oberhausen (DE)
(74) Representative: König Szynka Tilmann von Renesse Patentanwälte Partnerschaft mbB Düsseldorf

(57) **Abstract**

Combination of component a) comprising at least one alkali or alkaline earth carboxylate and component b) comprising at least one amidine and/or guanidine as well as a combination additionally comprising a component c) comprising at least one silane functionalized polymer or a composition comprising any of those combinations and a process for curing silane functionalized polymers or compositions comprising at least one silane functionalized polymer and a combination of componment a) and b).

## Description

The invention relates to the field of catalysis, especially catalysis of curing processes preferably for moisture-curing polymers such as silane functionalized polymers.

A plurality of curing catalysts is known in the state of the art comprising e.g. organo metal compounds such as tetravalent organic tin compounds DBTL, DOTL, dibutyltin bisacetylacetonate or tetravalent titanium compounds. Due to their ecotoxicology these compounds incited regulations and restrictions of their use and thus, raising the need for further developments towards more sustainable and less harmless compositions without compromising the required technical properties. For example, while formulations with greater than 0.5 wt% dibutyltin presently require labeling as toxic with reproductive IB classification, tin-containing formulations are proposed to be completely phased out in consumer applications during the next three to five years.

Moisture-curing systems comprising silane functionalized polymers are 1C systems that find application among others in the field of coatings, adhesives, sealants and elastomers (CASE). The cure chemistry and catalyst selection for these moisture-curable compositions can vary based upon the nature of the polymers and their moisture-curable groups. Tin-based complexes, particularly DBTL, efficiently catalyze moisture cure as well as alternative organotin and titanium compounds. For above reasons it would be beneficial to identify non-tin-based accelerators that accelerate curing.

Substitutes for catalysts should exhibit properties similar in terms of curing, storage stability, and appearance. There are some proposals for the replacement of known catalytic systems with other metal- and non-metal-based compounds featuring specific advantages and disadvantages such as low reactivity or unfavorable influences on the mechanical properties of the cured material. Therefore, there is still a need to address the weaknesses of suitable accelerators for curing reactions. The physical properties of uncured and cured compositions also warrant examination.

WO2020/169489A1 describes the use of alkali metal or alkali earth metal salt of neodecanoic acid as curing catalyst for a silane-functional polymer.

EP1445287B1 describes a moisture-curable composition comprising a silane functionalized polymer. One or more of various carboxylic acid metal salts together with one or more of various amine compounds such as aliphatic primary amines e.g. laurylamine are added as curing catalyst.

It was the object of the present invention to develop a catalyst, that does overcome at least one of the problems of the state of the art and/or to provide an alternative catalyst featuring enhanced curing speed, preferably at lower concentrations, that takes sustainability as well as health and environmental concerns into account, preferably without compromising on the technical properties of the cured composition.

The object was solved by a combination according to the present invention of component a) comprising at least one alkali or alkaline earth carboxylate and component b) comprising at least one amidine and/or guanidine as well as a combination additionally comprising a component comprising at least one silane functionalized polymer or a composition comprising any of those combinations and the process for curing silane functionalized polymers or compositions comprising at least one silane functionalized polymer with the combination of components a) and b). The combination of alkali or alkaline earth metal carboxylate and amidine and/or guanidine compound is essential for the invention. Alkali or earth alkali metal carboxylates alone often lack in achieving curability or sufficient curing times, especially at low catalyst concentrations. Surprisingly, it was found that the combination with amidines and/or guanidines may promote the curing process by signficantly increasing the curing speed and surprisingly improving the mechanical properties of the cured material, even at low catalyst concentrations.

Surprisingly, it was found that the combination of alkali or alkaline earth carboxylates with amidines and/or guanidines can show synergetic effects as co-catalytic system. The combination according to the invention thus may show improved curing perfomance in comparison to the neat components a) or b), allowing the amount of components that e.g. need labeling or hinder qualification for environmental labels such as the Blue Angel (an environmental label in Germany) to be reduced. Specifically, the combination according to the invention provides an enhanced curing performance without the need of vast amounts of amidine or DBU respectively (which needs labeling in an amount > 0.1 % by weight).

The cured materials also may show improved mechanical properties compared to those cured by the neat components a) or b).

A "combination" of component a) and b) according to the present invention may for example relate to an entity such as a mixture, a composition or a kit comprising components a) and b) or a cartridge comprising one, two or more chambers, preferably comprising one chamber, comprising components a), b) and optionally component c).

Alkali or alkaline earth metal carboxylates are organic metal salts wherein the cation is an alkali or alkaline earth metal represented by the first and second main group of the periodic system. The group of alkali metals typically comprises lithium, sodium, potassium, rubidium and cesium. The group of alkali earth metals typically comprises magnesium, calcium, strontium, barium, radium and beryllium. Preferred alkali earth metals are magnesium, calcium, strontium and barium.

In a preferred embodiment, component a) comprises at least one alkali metal carboxylate, preferably selected from the group of lithium carboxylate, sodium carboxylate, potassium carboxylate, rubidium carboxylate and cesium carboxylate or mixtures thereof, more preferably at least one potassium carboxylate.

Alkali metal carboxylates, wherein the cations are alkali metal ions are especially preferred in combination with guanidines and/or amidines. The use of potassium carboxylate is especially preferred.

A carboxylate in context of the present invention means a conjugated base of a carboxylic acid.

The carboxylic acid can be linear or branched and is preferably selected from the group of acetic acid, propionic acid, butyric acid, valeric acid, caproic acid, enanthic acid, caprylic acid, 2-ethylhexanoic acid, pelargonic acid, capric acid, undecanoic acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid, montanoic acid, melissic acid, and lacceric acid, undecylenic acid, linderic acid, tsuzuic acid, physeteric acid, myristoleic acid, 2-hexadecenoic acid, 6-hexadecenoic acid, 7-hexadecenoic acid, palmitoleic acid, petroselinic acid, oleic acid, elaidic acid, asclepinic acid, vaccenic acid, gadoleic acid, gondonic acid, cetoleic acid, erucic acid, brassidic acid, selacholeic acid, xymenic acid, lumequenic acid; linoleic acid, 10,12-octadecadienoic acid, hiragoic acid, α-eleostearic acid, β-eleostearic acid, punicic acid, linolenic acid, 8,11,14-eicosatrienoic acid, 7,10,13-docosatrienoic acid, 4,8,11,14-hexadecatetraenoic acid, moroctic acid, stearidonic acid, arachidonic acid, 8,12,16,19-docosatetraenoic acid, 4,8,12,15,18-eicosapentaenoic acid, clupanodonic acid, 4,8,12,15,18,21-tetracosahexaenoic acid, and docosahexaenoic acid; iso acid, ante-iso acid, tuberculostearic acid, pivalic acid, neodecanoic acid; tariric acid, stearoleic acid, crepenynic acid, xymenynic acid, 7-hexadecynoate; naphthenic acid, malvalic acid, sterculic acid, hydnocarpic acid, chaulmoogric acid, gorlic acid; sabinic acid, 2-hydroxytetradecanoic acid, ipurolic acid, 2-hydroxyhexadecanoic acid, jalapinolic acid, juniperic acid, ambrettolic acid, aleuritic acid, 2-hydroxyoctadecanoic acid, 12-hydroxyoctadecanoic acid, 18-hydroxyoctadecanoic acid, 9,10-dihydroxyoctadecanoic acid, ricinoleic acid, kamlolenic acid, licanic acid, 22-hydroxydocosanoic acid, cerebronic acid; succinic acid, glutaric acid, adipic acid, pimelic acid, sberic acid, azelaic acid, and sebacic acid and mixtures therefrom, more preferably selected from the carboxylic acid is selected from the group consisting of octylic acid, 2-ethylhexanoic acid, neodecanoic acid, oleic acid, pivalic acid, 2,2-dimethylbutanoic acid, 2,2-dimethylpentanoic acid, and naphthenic acid, preferably 2-ethylhexanoic acid, neodecanoic acid, most preferably neodecanoic acid or mixtures therefrom.

The carboxylic acid in a preferred embodiment is a hydrocarbon-substituted carboxylic acid, more preferably a hydrocarbon-substituted carboxylic acid, preferably with nonlinear, more preferably branched, hydrocarbon-substituents. A hydrocarbon in this context is an organic compound consisting entirely of hydrogen and carbon.

In a preferred embodiment the carboxylic acid comprises 5 to 20 carbon atoms, preferably 5 to 15 carbon atoms, more preferably 5 to 12 carbon atoms, most preferably 5 to 10 carbon atoms.

In a further preferred embodiment, the carboxylic acid has at least one tertiary or quaternary carbon atom, more preferably has a tertiary or quaternary α-carbon atom, most preferably a quaternary α-carbon atom. Carboxylic acid salts wherein the carboxylic acid features a tertiary or quaternary α-carbon atom are especially preferred. In this context the α-carbon atom refers to the first carbon atom that attaches to a functional group, here a carboxyl group. Tertiary or quaternary carbon atom in this context means that the carbon atom is bound to three or four carbon atoms, respectively.

The carboxylic acid is preferably selected from the group of 2-ethylhexanoic acid, neodecanoic acid, pivalic acid, 2,2-dimethylbutanoic acid and 2,2-dimethylpentanoic acid.

Preferably the carboxylic acid is a tertiary carboxylic acid, more preferably a trialkyl acetic acid and is more preferably selected from the group of, neodecanoic acid, pivalic acid, 2,2-dimethylbutanoic acid and 2,2-dimethylpentanoic acid, most preferably pivalic acid and/or neodecanoic acid.

In an especially preferred embodiment, the combination comprises component a) comprising at least one alkali metal salt selected from the group of alkali metal neodecanoate and alkali metal pivalate or mixtures thereof, more preferably selected from the group of potassium pivalate and potassium neodecanoate or mixtures thereof.

"Neodecanoic acid" refers to a mixture of carboxylic acids with the common structural formula C₁₀H₂₀O₂, a molecular weight of 172.26 g/mol, and the CAS number 26896-20-8. Components of the mixture are mainly acids with the common property of being a "trialkyl acetic acid" having three alkyl groups at the α-carbon, thus featuring a quaternary α-carbon, such as 2,2,3,5-tetramethylhexanoic acid, 2,2,3,5-tetramethylhexanoic acid, 2,4-dimethyl-2-isopropylpentanoic acid, 2,5-dimethyl-2-ethylhexanoic acid, 2,2-dimethyloctanoic acid, 2,2-diethylhexanoic acid.

The carboxylic acid is preferably selected from the group of neodecanoic acids with the common structural formula C₁₀H₂₀O₂ and mixtures thereof, preferably featuring a quaternary α-carbon, more preferably selected from the group of 2,2,3,5-tetramethylhexanoic acid, 2,2,5,5-tetramethylhexanoic acid, 2,4-dimethyl-2-isopropylpentanoic acid, 2,5-dimethyl-2-ethylhexanoic acid, 2,2-dimethyloctanoic acid, 2,2-diethylhexanoic acid and mixtures thereof. More preferably the neodecanoic acids comprise 2,2,5,5-tetramethylhexanoic acid, most preferably the neodecanoic acid is 2,2,5,5-tetramethylhexanoic acid.

Component a) may additionally comprise at least one solvent, preferably suitable to dissolve the alkali or alkaline earth metal salt, more preferably 1,2-Cyclohexane dicarboxylic acid diisononyl ester (DINCH).

The combination according to the invention additionally comprises component b) comprising at least one amidine and/or guanidine.

Amidines are amines featuring at least one functional group of RC(NR)NR₂, wherein R can be the same or different. Guanidines are amines featuring at least one functional group of RNC(NR₂)₂, wherein R can be the same or different.

In a preferred embodiment the amidine and/or guanidine is selected from the group consisting of (1-aminoethyl)-2-octyl-2-imidazoline, 1-(1-naphthyl)guanidine, 1-(2,3-xylyl)biguanide, 1-(2,3-xylyl)guanidine, 1-(2,6-xylyl)biguanide, 1-(2,6-xylyl)guanidine , 1-(2-ethylhexyl)biguanide, 1-(2-phenylethyl)biguanide, 1-(3-methylphenyl)biguanide 1-(3-methylphenyl)guanidine, 1-(4-methoxyphenyl)biguanide, 1-(4-methoxyphenyl)guanidine, 1-(4-methylphenyl)-3-octylguanidine, 1-(4-methylphenyl)-5-octylbiguanide, 1-(4-methylphenyl)biguanide, 1-(4-methylphenyl)guanidine, 1,2-bis[2-(1-methylethyl)phenyl]guanidine, 1-(4-nitrophenyl)biguanide, 1-(4-nitrophenyl)guanidine, 1-(benzyloxy) guanidine, 1-(hydroxymethyl)biguanide, 1-(2-hydroxyethyl)biguanide, 1-(1-naphthyl)biguanide, 1-(7-hydroxy-1-naphthyl)biguanide, 1-(morpholinosulfonyl)benzylbiguanide, 1-(o-tolyl)biguanide, 1-(o-tolyl)guanidine, 1,1,2,3,3-pentamethylguanidine, 1,1,2-trimethylguanidine, 1,1,3,3-tetramethyl-2-[3-(trimethoxysilyl)propyl]guanidine, 2-[3-(dimethoxy(methyl)silyl)propyl]-1,1,3,3-tetramethylguanidine, 2-[3-(methoxydimethylsilyl)propyl]-1,1,3,3-tetramethylguanidine, 2-[3-(1,1-diethoxy-3,3,3-trimethyldisiloxanyl)propyl]-1,1,3,3-tetramethylguanidine, 1,1,3,3-tetramethyl-2-[3-(tris(prop-1-en-2-yloxy)silyl)propyl]guanidine, 1,1,3,3-tetramethyl-2-[3-(2,5,8-trimethyl-4,6-dioxa-3,7-diaza-5-silanona-2,7-dien-5-yl)propyl]guanidine, 1,3-dimethyl-1,3-diphenyl-2-[2-(3-(tris(ethyl(methyl)amino)silyl)propoxy)ethyl]guanidine, 1,3-dicyclohexyl-2-[3-(triethoxysilyl)propyl]guanidine, 1,1,3,3-tetramethylguanidine (TMG), 1,1,3,3-tetraphenylguanidine, 1,1'-[4-(dodecyloxy)-m-phenylene]bisguanidine, 1,1'-[methylenebis(p-phenylene)]bisguanidine, 1,1-diethylbiguanide, 1,1-dimethylbiguanide, 1,1'-ethylenebisbiguanide, 1,2,3-trimethylguanidine, 1,2-diethyl-1,4,5,6-tetrahydropyrimidine, 1,2-diisopropyl-3-[bis(dimethyl-amino)methylene]guanidine, 1,2-dimethyl-1,4,5,6-tetrahydropyrimidine, 1,3-dibenzylguanidine, 1-di-(o-tolyl)guanidine, 1,3-diphenylbiguanide, 1,3-dimethylguanidine, 1,3-diphenylguanidine, 1,3-diphenyl-1,3-dimethylguanidine, 1,4-diazabicyclo[2.2.2]octane, 1,2-diphenyl-4,5-dihydro-1H-imidazole, 1,4,5,6-tetrahydropyrimidine (THP), 1,5,7-triazabicyclo[4.4.0]dec-5-ene (TBD), 1,5-diazabicyclo[4.4.0]dec-5-ene (DBD), 1,5-diaza-10-methylbicyclo[4.4.0]dec-5-ene, 1,5-diazabicyclo[4.3.0]non-5-ene (DBN), 1,5-diaza-3-methylbicyclo[4.3.0]non-5-ene, 1,5-diazabicyclo[4.2.0]oct-5-ene, 1,5-diazabicyclo[4.4.0]dec-5-ene, 1,5-dibutyl-4,5-dihydro-1H-1,2,4-triazole, 1,5-diphenylbiguanide, 1,5-ethylenebiguanide, 1,8-bis(tetramethylguanidino)naphthalene (TMGN), 1,8-diazabicyclo[5.3.0]dec-7-ene, 1,8-diazabicyclo[5.4.0]undec-7-ene (DBU), 1,9-diazabicyclo-[6.4.0]dodec-8-ene, 1,10-diazabicyclo[7.4.0]tridec-9-ene, 1,14-diazabicyclo[11.4.0]heptadec-13-ene, 1-[3-(dibutylamino)propyl]biguanide, 1-[3-(diethyl-amino)propyl]biguanide, 1-allylbiguanide, 1-benzyl-2,3-dimethylguanidine, 1-benzylaminoguanidine, 1-benzylbiguanide, 1-benzylguanidine, 1-cyclohexylbiguanide, 1-ethyl-2-isopropyl-1,4,5,6-tetrahydropyrimidine, 1-ethyl-2-methyl-1,4,5,6-tetrahydropyrimidine, 1-ethyl-2-n-propyl-1,4,5,6-tetrahydropyrimidine, 1-isopropyl-2-methyl-1,4,5,6-tetrahydropyrimidine, 1-methylbiguanide, 1-methyl-4,5-dihydro-1H-1,2,4-triazole, 1-morpholinobiguanide, 1-n-butylbiguanide, 1-n-butylguanidine, 1-n-butyl-N2-ethylbiguanide, 1-n-octadecylbiguanide, 1-n-propyl-2-methyl-1,4,5,6-tetrahydropyrimidine, 1-phenyl-1-methylbiguanide, 1-phenylbiguanide, 1-phenylguanidine, 1-phenyl-1-methylguanidine, 2-[(5,6,7,8-tetrahydronaphthalene-1-yl)amino]-2-imidazoline, 2-(phenylimino)imidazolidine, 2,3-dimethyl-3,4,5,6-tetrahydropyrimidine, 2,3-dimethylimidazole, 2,3,5,6-tetrahydro-3-phenyl-1H-imidazo[1,2-a]imidazole, 2,6-diazabicyclo[3.2.1]octane, 2,6-diazabicyclo[3.2.0]heptane, 2,6-diazabicyclo[3.3.0]octane, 2,7-diazabicyclo[4.2.0]octane, 2,7-diazabicyclo[3.3.0]octane, 2,7-diazabicyclo[4.3.0]octane, 2,8-diazabicyclo[4.2.0]octane, 2,8-diazabicyclo[4.3.0]nonane, 2-benzyl-2-imidazoline, 2-benzylbiguanide, 2-cyclohexyl-1,1,3,3-tetrapropylguanidine, 2-cyclohexyl-2-imidazoline, 2-ethyl-1,1,3,3-tetramethylguanidine, 2-ethyl-2-imidazoline, 2-ethyl-4-methylimidazole, 1-(1H-benzimidazol-2-yl)guanidine, 2-isopropyl-2-imidazoline, 2-methyl-2-imidazoline, 2-methyl-4,5-dihydro-1H-imidazole, 2-methylimidazole, 2-n-octyl-2-imidazoline, 2-n-propyl-2-imidazoline, 2-n-undecyl-2-imidazoline, 2-phenyl-1,3-dicyclohexylguanidine, 2-phenyl-1,1,3,3-tetramethylguanidine, 2-phenyl-2-imidazoline, 2-tert-butyl-1,1,3,3-tetramethylguanidine, 3,3,6,9,9-pentamethyl-2,10-diazabicyclo[4.4.0]dec-1-ene, 3-(2-phenylethyl)biguanide, 3-benzylbiguanide, 3-morpholinobiguanide, 3,6-diazabicyclo[3.2.0]heptane, 3,6-diazabicyclo[3.2.1]octane, 3,7-diazabicyclo[4.2.0]octane, 3,7-diazabicyclo[4.3.0]nonane, 3,8-diazabicyclo[4.3.0]nonane, 3,9-diazabicyclo[4.3.0]nonane, 4,4-diethyl-2-imidazoline, 4,4-dimethyl-2-imidazoline, 4,5-dimethyl-2-imidazoline, 4-ethyl-2-undecyl-2-imidazoline, 4-guanidinobenzoic acid, 6-dibutylamino-1,8-diazabicyclo[5.4.0]undec-7-ene (DBA-DBU), 6-hydroxyamino-1,8-diazabicyclo[5.4.0]undec-7-ene (DBU-OH), 7-isopropyl-1,5,7-triazabicyclo[4.4.0]dec-5-ene, 7-methyl-1,5,7-triazabicyclo[4.4.0]dec-5-ene (Me-TBD), 7-n-butyl-1,5,7-triazabicyclo[4.4.0]dec-5-ene, 7-cyclohexyl-1,5,7-triazabicyclo[4.4.0]dec-5-ene, 7-n-propyl-1,5,7-triazabicyclo[4.4.0]dec-5-ene, 7-phenyl-1,5,7-triazabicyclo[4.4.0]dec-5-ene, biguanide, dicyandiamide, guanidine, guanylthiourea, imidazole, N-(2-imidazolin-2-yl)-1-naphthalenamine, N-(2-imidazolin-2-yl)-2,3-xylidine, N-benzyl-2-butyl-1,4,5,6-tetrahydropyrimidine, N-butylimidazole, N-cyclohexyl-2-methyl-1,4,5,6-tetrahydropyrimidine, N-methyl-1,4,5,6-tetrahydropyrimidine, N',N"-dihexyl-3,12-diimino-2,4,11,13-tetraazatetradecanediamidine, N,N-diamidinoaniline, N,N'-dimethylformamidine, N,N-dimethylformamidine, N,N'-dimethylacetamidine, trimethylacetamidine, N-benzyl-N,N'-dimethylacetamidine, benzamidine, 2-methylbenzamidine, N,N'-dimethyl-N-ethylbenzamidine, N,N'-dicyclohexyl-N-methylacetamidine, triphenylbenzamidine, N,N'-diphenyl-N'-methylbenzylamidine, (Z)- or (E)-1-butyl-2,3-dicyclohexyl-1,3-dimethylguanidine, (Z)- or (E)-N-butyl-N'-cyclohexyl-N-ethylpiperidine-1-carboximideamide, 2-(2-nonyl-4,5-dihydro-1H-imidazol-1-yl)ethanol, N-(2-(2-butyl-4,5-dihydro-1H-imidazol-1-yl)ethyl)pentanamide, (Z)- or (E)-2,3-diisopropyl-1-methyl-1-[3-(trimethoxysilyl)propyl]guanidine, (Z)- or (E)-1-butyl-2,3-diisopropyl-1-(3-(trimethoxysilyl)propyl)guanidine, (Z)- or (E)-1-[3-(dimethoxy(methyl)silyl)propyl]-2,3-diisopropyl-1-methylguanidine, (Z)- or (E)-2,3-diisopropyl-1,1-bis(3-(trimethoxysilyl)propyl)guanidine, (Z)- or (E)-2,3-dicyclohexyl-1-methyl-1-(3-(trimethoxysilyl)propyl)-guanidine, 2-(2-hydroxy-2-(3-(trimeth-oxysilyl)propoxy)ethyl)-1,1,3,3-tetramethylguanidine, 2-(2-hydroxy-1-(3-(trimethoxysilyl)propoxy)ethyl)-1,1,3,3-tetramethylguanidine, 2-(2,3,4,6,7,8,9,10-octahydropyrimido[1,2-a]azepin-1-ium-1-yl) 1-(3-(trimethoxysilyl)propoxy)ethanolate, (Z)- or (E)-1-(2-((E)-2,3-diisopropylguanidino)ethyl)-2,3-diisopropyl-1-(3-(triethoxysilyl)propyl)guanidine, and mixtures thereof.

Component b) may additionally comprise at least one solvent.

In a preferred embodiment, component b) comprises at least one amidine, preferably at least one cyclic amidine or bicyclic amidine, more pereferably a bicyclic amidine, most preferably selected from the group consisting of 1,8-Diazabicyclo[5.4.0]undec-7-en (DBU) and 1,5-Diazabicyclo[4.3.0]non-5-en (DBN) and 1,5-diazabicyclo[4.4.0]dec-5-ene (DBD), most preferably 1,8-Diazabicyclo[5.4.0]undec-7-en (DBU).

In one embodiment component b) is at least one amidine, preferably cyclic amidine or bicyclic amidine, more pereferably a bicyclic amidine, most preferably selected from the group consisting of 1,8-Diazabicyclo[5.4.0]undec-7-en (DBU) and 1,5-Diazabicyclo[4.3.0]non-5-en (DBN) and 1,5-diazabicyclo[4.4.0]dec-5-ene (DBD).

Especially preferred is a combination of component a) comprising potassium neodecanoate and/or potassium pivalate and component b) comprising at least one amidine, preferably cyclic amidine or bicyclic amidine, more pereferably a bicyclic amidine, most preferably selected from the group consisting of 1,8-Diazabicyclo[5.4.0]undec-7-en (DBU) and 1,5-Diazabicyclo[4.3.0]non-5-en (DBN) and 1,5-diazabicyclo[4.4.0]dec-5-ene (DBD).

Most preferred is a combination of potassium neodecanoate and/or potassium pivalate, optionally dissolved in a solvent and 1,8-Diazabicyclo[5.4.0]undec-7-en (DBU). Component b) may additionally comprise at least one guanidine.

In an alternative embodiment, component b) comprises at least one guanidine, pereferably an alkylated guanidine, more preferably a tetraalkylated guanidine, most preferably 1,1,3,3-Tetramethylguanidine (TMG).

In another alternative embodiment component b) comprises at least one cyclic or bicyclic guanidine, preferably selected from the group consisting of 1,5,7-triazabicyclo[4.4.0]dec-5-ene (TBD) and 7-methyl-1,5,7-triazabicyclo[4.4.0]dec-5-ene (Me-TBD).

In one embodiment component b) is at least one guanidine.

Especially preferred is a combination of component a) comprising potassium neodecanoate and/or potassium pivalate and component b) comprising at least one guanidine, pereferably an alkylated guanidine, more preferably a tetraalkylated guanidine, most preferably 1,1,3,3-Tetramethylguanidine (TMG).

In an alternative embodiment component b) comprises 1,8-bis(tetramethylguanidino)naphthalene (TMGN).

Most preferred is a combination of potassium neodecanoate and/or potassium pivalate, optionally dissolved in a solvent, and 1,1,3,3-Tetramethylguanidine (TMG).

In a preferred embodiment the weight ratio of component a), preferably of the at least one alkali or alkaline earth metal carboxylate, preferably the at least one alkali earth metal carboxylate, to component b), preferably to the at least one amidine and/or guanidine, is 25:1 to 1:25, preferably 20:1 to 1:1, more preferably 10:1 to 3:2, most preferably 15:2 to 5:2.

Most preferred is a combination of component a) comprising potassium neodecanoate and/or potassium pivalate and component b) comprising at least one amidine, preferably cyclic amidine or bicyclic amidine, more pereferably a bicyclic amidine, most preferably selected from the group consisting of 1,8-Diazabicyclo[5.4.0]undec-7-en (DBU) and 1,5-Diazabicyclo[4.3.0]non-5-en (DBN) and 1,5-diazabicyclo[4.4.0]dec-5-ene (DBD), wherein the weight ratio of potassium neodecanoate and/or potassium pivalate to amidine is 25:1 to 1:25, preferably 20:1 to 1:1, more preferably 10: 1 to 3:2, most preferably 15:2 to 5:2.

In an alternative embodiment the combination consists of component a) comprising potassium neodecanoate and/or potassium pivalate and component b) comprising at least one guanidine, pereferably an alkylated guanidine, more preferably a tetraalkylated guanidine, most preferably 1,1,3,3-Tetramethylguanidine (TMG), wheren the weight ratio of potassium neodecanoate and/or potassium pivalate to guanidine is 25:1 to 1:25, preferably 20:1 to 1:1, more preferably 10:1 to 3:2, most preferably 15:2 to 5:2.

Preferably the combination comprises 0.05 to 1.0 parts per weight, preferably 0.09 to 0.99 parts per weight, most preferably 0.15 to 0.5 parts per weight, alternatively 0.05 to 0.18 parts per weight, preferably 0.05 to 0.15 parts per weight, more preferably 0.05 to 0.09 parts per weight of component a), preferably of the at least one alkali or alkaline earth metal carboxylate, more preferably of the alkali metal carboxylate, and/or 0.005 to 0.2 parts per weight, preferably 0.01 to 0.1 parts per weight, most preferably 0.05 to 0.1 parts per weight of component b), preferably of the at least one amidine and/or guanidine.

More preferably the combination comprises 0.05 to 1.0 parts per weight, preferably 0.09 to 0.99 parts per weight, most preferably 0.15 to 0.5 parts per weight of component a), preferably of the at least one alkali or alkaline earth metal carboxylate, and/or 0.005 to 0.2 parts per weight, preferably 0.01 to 0.1 parts per weight, most preferably 0.05 to 0.1 parts per weight of component b), preferably of the at least one amidine and/or guanidine and the weight ratio of component a), preferably of the at least one alkali or alkaline earth metal carboxylate, to component b), preferably to the at least one amidine and/or guanidine, is 25:1 to 1:25, preferably 20:1 to 1:1, more preferably 10:1 to 3:2, most preferably 15:2 to 5:2.

Parts per weight in this context refers to the parts of the components relative to one another with regard to their weight, respectively.

The combination according to the invention may additionally comprise component c) comprising at least one silane functionalized polymer.

According to the invention, the term "silane" or "organosilane" refers to compounds which feature at least one, preferably two or three, hydrolysable groups, such as hydroxy groups, alkoxy groups or acyloxy groups, preferably alkoxy groups, bonded directly to the silicon atom via Si- O bonds and at least one organic radical bonded directly to the silicon atom via an Si- C bond.

Correspondingly, the term "silane group" refers to the silicon-containing group bonded to the organic radical of the silane.

The silanes and their silane groups undergo hydrolysis in the event of contact with water or moisture. This produces organosilanols, meaning silicon-organic compounds containing one or more silanol groups (Si- OH groups) and, through subsequent condensation reactions, organosiloxanes, in other words silicon-organic compounds containing one or more siloxane groups (Si- O- Si groups) are formed.

According to the invention, the term "silane-functionalized" refers to compounds which have silane groups. "Silane-functionalized polymers", accordingly, are polymers, more particularly organic polymers, which have at least one, preferably two or more, more preferably two silane groups.

The silane-functionalized polymer is preferably moisture-curing, meaning that in the presence of water or moisture, more particularly moisture, the hydrolysis and condensation reactions on the silane groups take place, causing crosslinking of the polymer molecules and curing of the composition. The curing is also referred as crosslinking.

In one embodiment the silane-functionalized polymer comprises an n-valent polymeric backbone Y and n groups according to formula (I):

-Si(R⁴)ₚ(OR⁵)₃₋ₚ) (I)

wherein
- R⁴ is a linear or branched monovalent hydrocarbon radical having 1 to 10 carbon atoms, more preferably methyl or ethyl;
- R⁵, identical or different, represents each an acyl radical, or a linear or branched, monovalent hydrocarbon radical having 1 to 10 carbon atoms, preferably from 1 to 5 carbon atoms, more particularly R5 being methyl or ethyl;
- or two radicals R⁵ may form a cycle; and
- p is 0, 1 or 2, preferably 0
- Y is preferably selected from the group consisting of polyether, polyetherpolyol, polyester, poly(ether-ester), polyolefin, polycaprolactone, polycarbonate, poly(ether-carbonate), poly(meth)acrylate, polyacetal, polythioether and polyurethane, more preferably polyether polyol or polyurethane, most preferably polyurethane. polyether polyol, and polyurethane.
- n is an integer, preferably between 1 and 4, more preferably, 2 or 3, most preferably 2.

The groups having the formula (I) may be located at a main chain end, or at a side chain end, or at both ends. The main chain refers to the polymeric backbone Y, wherein the groups having the formula (I) are bound directly to the polymeric backbone Y or by groups dependent on the route of synthesis, respectively.

In one embodiment, the silane-functionalized polymer comprises at least one group, preferably two groups or three groups, more preferably two groups having the formula (I) above, wherein each occurrence of R⁵ represents an alkyl group comprising from 1 to 10 carbon atoms, preferably from 1 to 5 carbon atoms.

Preferably, the silane-functionalized polymer comprises groups having the formula (I) above which are chosen from the group consisting of a trimethoxysilyl group, a triethoxysilyl group, a methyldimethoxysilyl group, a methyldiethoxysilyl group, a dimethylmethoxysilyl group, a dimethylethoxysilyl group.

More preferably, the silane-functionalized polymer comprises trimethoxysilyl or triethoxysilyl end groups, even more preferably trimethoxysilyl end groups.

Preferably, the groups of formula (I) are located at the main chain ends.

According to the invention, the silane-functionalized polymer may have a polymer backbone Y selected from the group consisting of polyether, polyetherpolyol, polyester, poly(ether-ester), polyolefin, polycaprolactone, polycarbonate, poly(ether-carbonate), poly(meth)acrylate, polyacetal, polythioether and polyurethane, preferably polyether or polyurethane,

The silane-functionalized polymer may have a number-average molecular weight ranging from 1 000 to 100 000 g/mol, preferably ranging from 2 000 to 50 000 g/mol, more preferably from 3 000 to 30 000 g/mol, in particular from 3 000 to 25 000 g/mol. The number-average molecular weight of the silane-functionalized polymer can be measured by methods well known to those skilled in the art, for example by s exclusion chromatography (SEC) using polystyrene type standards.

Suitable silane-functionalized polymers may be produced by a known method such as those described hereinafter, as described in JPB198618569, or is commercially available. Commercially available products include, for example, Kaneka MS polymer series (dimethoxymethylsilyl group-containing polymers such as MS polymer S-203, MS polymer S-303, MS polymer S-227, MS polymer S-327, S-810, S-943, MS polymer SAX-220, MS polymer SAX-260, MS polymer SAX-350, MS polymer SAX-400, etc. ;trimethoxysilyl group-containing polymers such as MS polymer SAX-510, MS polymer SAX-520, MS polymer SAX-530, MS polymer SAX-580, MS polymer SAX-590; MS polymer S-903, MS polymer S-911 etc), Silyl series (Silyl polymer SAT-200, Silyl polymer MA430, Cyril polymer MAX447, etc.), MA series, such as MA903, SA series, such as SA100S and SA310S, or other series available from Kaneka Corporation;, Polymer ST, as for example Polymer ST61, from Evonik; DESMOSEAL^{®} from Covestro, SPUR+1010LM, 1015LM, and 1050MM from MOMENTIVE; Geniosil STP-E such as Geniosil STP-E10, Geniosil STP-E30 or Geniosil STP-E15, Geniosil STP-E35 from Wacker or S2410, S2420, S3430, S3630, W2450, and MSX931 from Asahi Glass.

In one embodiment the silane-functionalized polymer is a silane-functionalized polymer 1c) obtainable by the reaction of a silane having at least one group that is reactive toward isocyanate groups, preferably selected from the group consisting of mercaptosilanes and aminosilanes, more preferably an aminosilane with a polymer, preferably a polyurethane polymer, which contains isocyanate groups.

Preferably, the aminosilane has the following formula (II):

R⁶-NH-R³-Si(R⁴)p(OR⁵)_{3 -p} (II)

wherein:
- R⁴, R⁵, and p are as defined above for the silane group of formula (I);
- R³ represents a linear or branched divalent hydrocarbon radical having from 1 to 12 carbon atoms, optionally comprising at least one heteroatom, preferably R³ represents an alkylene radical having from 1 to 6 carbon atoms, preferably methylene or propylene, more particularly a propylene; and
- R⁶ is a hydrogen atom, a linear or branched alkyl radical, an arylalkyl radical, a cyclic radical comprising from 1 to 20 carbon atoms, or a radical of the formula below:

   R¹⁰ -CH(R⁸ )-CH(R⁷ )

in which the radicals R⁷ and R⁸ are in each case independently of one another are a hydrogen atom or a radical from the group consisting of -R⁹, -COOR⁹ and -CN;
the radical R¹⁰ is a hydrogen atom, a radical from the group consisting of -CH₂ -COOR⁹, -COOR⁹, -CONHR⁹, -CON(R⁹)₂, -CN;
the radical R⁹ being a hydrocarbon radical having 1 to 20 carbon atoms which optionally comprises at least one heteroatom.

In particular, R⁶ may be chosen from the following radicals:
NC-CH₂-CH₂-
R⁹ -OOC-CH2 -CH2 -
R⁹ -NH-C(=0)-CH2 -CH2 -
(R⁹)₂ N-C(=0)-CH₂ -CH₂ - wherein R⁹ is as defined above.

Preferably the aminosilane is selected from the group consisting of primary aminosilanes, such as 3-aminopropyltrimethoxysilane, 3-aminopropyldimethoxymethylsilane; secondary aminosilanes such as for example N-butyl-3-aminopropyltrimethoxysilane, N- phenyl-3-aminopropyltrimethoxysilane; the products of the Michael-like addition of primary aminosilanes such as for example 3-aminopropyltrimethoxysilane or 3- aminopropyldimethoxymethylsilane with Michael acceptors such as for example acrylonitrile, acrylic esters, acrylamides, maleic diesters, methylene malonate diesters, itaconic diesters, e.g., dimethyl and diethyl N-(3-trimethoxysilylpropyl)aminosuccinate; and also analogs of the stated aminosilanes having ethoxy groups instead of the methoxy groups on the silicon, preferably having ethoxy groups.Typically, Michael acceptors are compounds which contain double bonds activated by electron acceptor radicals and which are therefore able to enter with primary amino groups (NH2 groups) into nucleophilic addition reactions in a manner analogous to Michael addition (hetero-Michael addition).

Preferably polymers, more preferably polyurethane polymers, containing isocyanate groups for producing a silane-functionalized polymer 1c) are obtainable by the reaction of at least one polyol with at least one polyisocyanate, more particularly a diisocyanate. This reaction may be accomplished by bringing the polyol and the polyisocyanate to reaction with customary methods, as for example from temperatures of 0°C to 100°C, preferably 0°C to 50 °C, optionally in a presence of catalyst(s), the polyisocyanate being metered such that these isocyanate groups are preferably in a stoichiometric excess in relation to the hydroxyl groups of the polyol.

Suitable polyols for preparing the silane functionalized polymer 1c) are, in particular, polyether polyols, polyester polyols, poly(ether-carbonate) and polycarbonate polyols, and also mixtures of these polyols. Particularly suitable are polyoxyethylene polyols (PEG), polyoxypropylene polyols (PPG), polyoxybutylene polyols (PBG) and poly(oxyethylene-oxypropylene) polyols more particularly polyoxypropylene diols, poly(oxyethylene-oxypropylene) diols, polyoxypropylene triols and poly(oxyethylene-oxypropylene) triols.

Preferred polyols are polyester polyols and polyether polyols, more particularly polyoxyethylene polyol, polyoxypropylene polyol, and polyoxypropylene-polyoxyethylene polyol, preferably polyoxyethylene diol, polyoxypropylene diol, polyoxyethylene triol, polyoxypropylene triol, polyoxypropylene-polyoxyethylene diol and polyoxypropylene- polyoxyethylene triol.

Polyisocyanates which can be used for preparing the silane functionalized polymer 1c) are in particular commercial polyisocyanates, especially diisocyanates.

Preferably diisocyanates are selected from the group consisting of 1 ,6-hexamethylene diisocyanate (HDI), 2- methylpentamethylene 1 ,5-diisocyanate, 2,2,4- and 2,4,4-trimethyl-1 ,6-hexamethylene diisocyanate (TMDI), 1 ,12-dodecamethylene diisocyanate, lysine and lysine ester diisocyanate, cyclohexane 1 ,3-diisocyanate, cyclohexane 1 ,4-diisocyanate, 1-isocyanato- 3,3,5-trimethyl-5-isocyanatomethylcyclohexane (isophorone diisocyanate or IPDI), perhydro- 2,4'-diphenylmethane diisocyanate and perhydro-4,4'-diphenylmethane diisocyanate, 1 ,4-diisocyanato-2,2,6-trimethylcyclohexane (TMCDI), 1 ,3- and 1 ,4-bis(isocyanatomethyl)cyclohexane, m- and p-xylylene diisocyanate (m- and p-XDI), m- and p- tetramethyl-1 ,3-xylylene diisocyanate, m- and p-tetramethyl-1 ,4-xylylene diisocyanate, bis(1- isocyanato-1-methylethyl)naphthalene, 2,4- and 2,6-tolylene diisocyanate (TDI), 4,4'-, 2,4'-, and 2,2'-diphenylmethane diisocyanate (MDI), 1 ,3- and 1 ,4-phenylene diisocyanate, 2, 3,5,6- tetramethyl-1 ,4-diisocyanatobenzene, naphthalene 1 ,5-diisocyanate (NDI), 3,3'-dimethyl-4,4'- diisocyanatobiphenyl (TODD, oligomers and polymers of the aforesaid isocyanates, and mixtures thereof.

In another embodiment, the silane-functionalized polymer is a silane-functional polymer 2c) obtainable by the reaction of an isocyanatosilane with a polymer which has functional end groups that are reactive towards isocyanate groups, more particularly hydroxyl groups, mercapto groups and/or amino groups.

This reaction may take place in a stoichiometric ratio of the isocyanate groups to the functional end groups that are reactive toward isocyanate groups of 1:1, or with a slight excess of the functional end groups that are reactive toward isocyanate groups, as for example at temperatures of 20°C to 100°C, optionally in presence of catalysts.

Preferably, the isocyanatosilane having the following formula (III):

NCO-R³-Si(R⁴)p(OR⁵)3-p (III)

wherein R³, R⁴, R⁵ and p are as defined above for the silane group of formula (I), including the preferred embodiments.

Examples of suitable isocyanatosilanes of the formula (III) are isocyanatomethyltrimethoxysilane, isocyanatomethyldimethoxymethylsilane, 3-isocyanatopropyltrimethoxysilane, 3-isocyanatopropyldimethoxymethylsilane, isocyanatomethyltriethoxysilane, isocyanatomethyldiethoxymethylsilane.

As functional end groups that are reactive toward isocyanate groups, the polymer preferably contains hydroxyl groups. Suitable polymers containing hydroxyl groups are high molecular mass polyoxyalkylene polyols, preferably polyoxypropylene diols.

Also suitable for reaction with isocyanatosilanes of the formula (III) may be polyurethane polymers containing hydroxyl groups, more particularly polyurethane polymers terminated with hydroxyl groups. Polyurethane polymers of this kind are typically obtainable through the reaction of at least one polyisocyanate with at least one polyol. This reaction may be accomplished by reacting the polyol and the polyisocyanate by customary methods, as for example at temperatures of 50°C to 100°C, optionally in presence of a catalyst, the polyol being metered such that its hydroxyl groups are in a stochiometric excess in relation to the isocyanate groups of the polyisocyanate.

Polyols and polyisocyanates suitable for this reaction are typically the same as those already mentioned as being suitable for the preparation of a polymer containing isocyanate groups that is used for the preparation of a silane-functional polymer 1c) with aminosilane.

In another embodiment, the silane-functionalized polymer is a silane-functionalized polymer 3c), obtainable by a hydrosilylation reaction of polymers having terminal double bonds, preferably selected from the group consisting of poly(meth)acrylate polymers or polyether polymers, more particularly of allyl-terminated polyoxyalkylene polymers.

In a preferred embodiment the combination comprises 5 - 100 parts per weight, preferably 5 - 60 parts per weight of component c), more preferably it comprises 0.05 - 1.0 parts per weight of component a), 0.005 - 0.2 parts per weight of component b) and 5 - 100 parts per weight of component c).

Especially preferred is a combination of component a) comprising potassium neodecanoate and/or pivalate and component b) comprising at least one guanidine and/or amidine and component c) comprising at least one silane functionalized polymer, preferably at least one silane functionalized polymer 1c), 2c) and/or 3c), more preferably at least one silane functionalized polymer 1c) or 2c).

In another embodiment the combination comprises component a) comprising potassium neodecanoate and/or potassium pivalate and component b) comprising at least one cyclic amidine or bicyclic amidine, pereferably a bicyclic amidine, more preferably selected from the group consisting of 1,8-Diazabicyclo[5.4.0]undec-7-en (DBU) and 1,5-Diazabicyclo[4.3.0]non-5-en (DBN), 1,5-diazabicyclo[4.4.0]dec-5-ene (DBD), most preferably 1,8-Diazabicyclo[5.4.0]undec-7-en (DBU) and component c) comprising at least one silane functionalized polymer, preferably at least one silane functionalized polymer 1c), 2c) and/or 3c), more preferably at least one silane functionalized polymer 1c) or 2c).

In an alternative embodiment the combination comprises component a) comprising potassium neodecanoate and/or potassium pivalate, component b) comprising at least one guanidine, pereferably an alkylated guanidine, more preferably a tetraalkylated guanidine, most preferably 1,1,3,3-Tetramethylguanidine and component c) comprising at least one silane functionalized polymer preferably at least one silane functionalized polymer 1c), 2c) and/or 3c), more preferably at least one silane functionalized polymer 1c) or 2c).

Object of the invention is also a curable composition comprising component a), component b) and component c).

The curable composition is preferably tin-free. The curable composition comprises a combination of component a) and b), preferably a combination of a), b) and c).

In a preferred embodiment the curable composition comprises 0.05 - 1.0 parts per weight, preferably 0.05 - 0.5 parts per weight of component a), preferably of at least one alkali metal carboxylate, more preferably potassium neodecanoate and/or potassium pivalate,
0.005 - 0.2 parts per weight, preferably 0.01 to 0.1 parts per weight of component b), preferably at least one amidine and/or guanidine, more preferably DBU, and
5 -100 parts per weight, preferably 5 - 60parts per weight of component c) comprising at least one silane functionalized polymer,
preferably 1c), 2c) and/or 3c), preferably at least one silane functionalized polymer 1c) or 2c).).

In another preferred embodiment the curable composition comprises 0.05 - 1.0 parts per weight, preferably 0.05 - 0.5 parts per weight of component a), preferably of at least one alkali metal carboxylate, more preferably potassium neodecanoate and/or potassium pivalate,
0.005 - 0.2 parts per weight, preferably 0.01 to 0.1 parts per weight of component b), preferably at least one amidine and/or guanidine, more preferably DBU, and 5 - 100 parts per weight, preferably 5 - 60 parts per weight of component c) comprising at least one silane functionalized polymer,
preferably 1c), 2c) and/or 3c), more preferably at least one silane functionalized polymer 1c) or 2c), whereby the weight ratio of component a) to component b), preferably of the at least one alkali metal carboxylate to the at least one amidine and/or guanidine is 25:1 to 1:25, preferably 20:1 to 1:1, more preferably 10:1 to 3:2, most preferably 15:2 to 5:2.

Especially preferred is a composition wherein the total amount of catalyst is ≤ 2 parts per weight. Preferably the composition comprises ≤ 2 parts per weight of the combination of component a) and b), preferably the composition comprises ≤ 2 parts per weight of the combination of a) at least one alkali metal carboxylate, preferably potassium neodecanoate and/or potassium pivalate and b) at least one guanidine, preferably 1,1,3,3-Tetramethylguanidine and/or amidine, preferably 1,8-Diazabicyclo[5.4.0]undec-7-en.

In a preferred embodiment the composition comprises less than 0.1 % per weight of component b), preferably of at least one cyclic amidine or bicyclic amidine, more pereferably a bicyclic amidine, most preferably of 1,8-Diazabicyclo[5.4.0]undec-7-en (DBU).

The curable composition preferably contains additionally at least one additive selected from the group consisting of pigments, dyes, adhesion promoters, solvents, drying agents, anti-oxidant, wetting-agents, UV absorber, reactive diluent, thixotropic agents, fillers, plasticizers, and mixtures thereof.

Preferably component c) comprises at least one additive selected from the group consisting of pigments, dyes, adhesion promoters, solvents, drying agents, anti-oxidant, wetting-agents, UV absorber, reactive diluent, thixotropic agents, fillers, plasticizers, and mixtures thereof, more preferably component c) comprises at least one plasticizer and/or drying agent and optionally at least one filler.

Preferably plasticizers are those selected from the group consisting of esters of organic carboxylic acids or their anhydrides, such as fatty acid alkyl esters, adipates, such as dioctyl adipate, diethyloctyladipate, diethylhexyladipate, phtalates, polyols, such as polyoxyalkylene polyols, polyether polyols or polyester polyols, organic phosphoric and sulfonic esters, mineral oils or polybutenes or diisononyl 1,2-cyclohexanedicarboxylate (DINCH), alkylsulfonic esters of phenol such as (C10-C21) Alkansulfonsäurephenylester (Mesamoll^{®}), rapeseed oil methyl esters, epoxidized soybean oil or a combination thereof. Preferably, the composition does not comprise phtalate-containing plasticizers. More preferably the plasticizer is selected from the group of diisononyl 1,2-cyclohexanedicarboxylate (DINCH), (C10-C21) Alkansulfonsäurephenylester, diethyloctyladipate or diethylhexyladipate.

The composition preferably comprises 0 to 50 parts per weight, preferably from 5 to 20 parts per weight of at least one plasticizer.

The composition of the invention may optionally comprise at least one filler. The filler may not only influence the rheological properties of the uncured composition but also the mechanical properties and the surface quality of the cured composition.

Fillers can be inorganic and organic fillers such as natural, ground or precipitated calcium carbonates, with or without a coating of fatty acids, especially stearic acid, barium sulfate (BaSCU, also called barite or heavy spar), calcined kaolins, aluminum oxides, aluminum hydroxides, silica, especially highly dispersed silica from pyrolysis operations, carbon blacks, especially industrial carbon black, PVC powders or hollow beads.

Preferred fillers are calcium carbonates, calcined kaolins, carbon black, highly dispersed silicas, and flame-retardant fillers, such as hydroxides or hydrates, more particularly hydroxides or hydrates of aluminum, preferably aluminum hydroxide or a mixture thereof.

The composition most preferably comprises ground calcium carbonate, optionally coated, as filler. Alternatively, the composition comprises preferably highly dispersed silica as filler.

The total amount of fillers in the composition, where used, may vary from 80 to 0 parts per weight, preferably from more than 25 parts per weight, more preferably more than 60 parts per weight, alternatively from 25 to 50 parts per weight.

The composition may optionally comprise at least one thixotropic agent, such as for example polyamide waxes, bentonites, fumed silicas, organically modified castor oil and amide waxes, or combinations thereof.

The organically modified castor oil may be, for example, a hydrogenated castor oil or another castor oil derivative. One example of a commercially available organically modified castor oil is Thixatrol ST. The composition may optionally comprise at least one adhesion promoters, such as for example epoxysilanes (meth)acrylosilanes, anhydridosilanes, or adducts of the aforesaid silanes with primary aminosilanes, aminosilanes, urea silanes or mixtures thereof.

The drying agent is preferably selected from the group of vinyltrimethoxysilane (VTMO), vinyltriethoxysilane (VTEO), alkoxyarylsilanes and mixtures thereof, more preferably the drying agent is vinyltrimethoxysilane. Preferably the curable composition comprises 0 to 3 parts per weight, more preferably 0 to 1 parts per weight drying agent.

The curable composition may comprise at least one UV anti-oxidant, preferably selected from the group consisting of benzotriazoles, benzophenones, sterically hindered amines that are no amidines or guanidines, such as for example bis(2, 2,6,6, - tetramethyl-4-piperidyl)sebaceate, and mixtures thereof.

The composition may optionally comprise a reactive diluent preferably comprising at least one functional group that reacts after application of the composition, for example with moisture or with atmospheric oxygen, preferably selected from the group consisting of silyl groups, vinyl-unsaturated groups, and polyunsaturated systems. The viscosity of the reactive diluent is preferably less than 20 000 mPa.s, particularly less than 6 000 mPa.s (determined by Brookfield RVT at 23°C).

Optionally the composition may comprise solvent in particular for reducing its viscosity, preferably selected from the group of aliphatic or aromatic hydrocarbons, halogenated hydrocarbons, alcohols, ketones, esters, ethers may be used as solvents.

In a preferred embodiment the composition comprises
0.05 to 1.0 parts per weight of component a),
0.005 to 0.2 parts per weight of component b)
5 to 60 parts per weight of component c)
0 to 20 parts per weight of plasticizer(s) and
25 to 80 parts per weight of filler(s), preferably wherein

- component a) comprises at least one alkali metal carboxylate, more preferably selected from the group of potassium neodecanoate and potassium pivalate and
- component b) comprises at least one amidine and/or guanidine, more preferably DBU and/or TMG
- component c) comprises at least one silane functionalized polymer,
more preferably and wherein the plasticizer is selected from the group of diisononyl 1,2-cyclohexanedicarboxylate (DINCH), (C10-C21) Alkansulfonsäurephenylester, diethyloctyladipate or diethylhexyladipate and wherein the filler is at least one ground and/or coated calcium carbonate or highly dispersed silica and wherein the composition comprises optionally a drying agent, preferably vinyltrimethoxysilane, and an adhesion promoter, preferably 3-aminopropyltrimethoxysilane.

The composition may be manufactured using known methods.

Preferably the composition is stable on storage, meaning that it can be kept in the absence of moisture in a suitable system, such as a cartridge, preferably featuring one chamber, over a period ranging from several months up to a year or more, without undergoing any change in its curing properties or in its properties after curing. The stability is typically determined via measurement of the viscosity or extrusion force or application rate at as specified applied pressure.

Another object according to the invention is a process for curing a silane functionalized polymer comprising the steps of
- providing a combination of components a) and b)
- contacting said combination to component c) and
- exposing said combination of component a), b) and c) to water, preferably to moisture, thereby obtaining a cured silane functionalized polymer.
- The process may additionally comprise the steps of mixing the combination of components a), b) and optionally c).

The process may additionally comprise the steps of
- adding at least one filler, preferably to component c)
- adding at least one aminosilane, preferably to component c) and/or
- adding at least one plasticizer and/or drying agent, preferably to component c).

The steps of the process according to the invention may be taken out in any possible sequence.

Another object according to the invention is a process for curing a composition comprising silane functionalized polymers comprising the steps of
- providing a composition comprising component a), b) and c) and
- exposing said composition to water, preferably to moisture, thereby obtaining a cured composition.

The process may additionally comprise the steps of
- mixing the composition and/or
- discharging the composition from a cartridge.

Another object of the invention is the use of a combination of component a) and b) for curing of silane functionalized polymers.

In a preferred embodiment a combination of component a) comprising an alkali metal carboxylate, preferably potassium neodecanoate and/or potassium pivalate and component b) comprising an amidine and/or guanidine, preferably DBU and/or TMG is used for curing of at least one silane functionalized polymer or a composition comprising at least one silane functionalized polymer.

In one embodiment the combination of component a) and b) is used for curing of a composition according to the invention.

### Examples

### Details of raw materials and Suppliers

Silane-functionalized polymers (**SMP**s)
- Si-PolyU XP 5013-1
- Si-PolyU XP 4020-1
- Si-PolyU XP 2550-1
- STP-E 15
- MS Polymer SAX 520
- MS Polymer S203H
- MS Polymer S303H
- TIB KAT K25 D60: Potassium neodecanoate (CAS 26761-42-2) dissolved in 1,2-Cyclohexane dicarboxylic acid diisononyl ester (DINCH, CAS 166412-78-8) commercialized by TIB Chemicals
- TIB KAT 616: CAS 27253-29-8, Zinc neodecanoate commercialized by TIB Chemicals
- Borchi Kat 315: CAS 34364-26-6, Bismuth neodecanoate commercialized by Borchers
- DOTL 20%: Dioctyltin dilaurate (CAS 3648-18-8) dissolved in 1,2-Cyclohexane dicarboxylic acid diisononyl ester (DINCH, CAS 166412-78-8) commercialized by BNT Chemicals
- DBU: CAS 6674-22-2, 1,8-Diazabicyclo[5.4.0]undec-7-ene commercialized by Sigma-Aldrich
- DBN: CAS 3001-72-7, 1,5-Diazabicyclo(4.3.0)non-5-ene commercialized by Sigma- Aldrich
- TMG: CAS 80-70-6, 1,1,3,3-Tetramethylguanidine commercialized by TCI Chemicals
- N-Methylimidazole: CAS 616-47-7 commercialized by TCI Chemicals
- Laurylamine: CAS 124-22-1 commercialized by Sigma-Aldrich
- PPG1000: polyether diol having a molecular weight of 1000 g/mol, commercialized by COVESTRO as Arcol Polyol PPG1000 or SHELL as Caradol ED 110-200 or Rokita as Rokopol D1002?
- DINP: CAS 28553-12-0, Diisononyl phthalate, used as a plasticizer by Krahn Chemie
- AMMO: CAS 13822.56.5, 3-Aminopropyltrimethoxysilane commercialized by Sigma-Aldrich.
- VTMO: CAS 2768-02-7, Vinyltrimethoxysilane commercialized by Sigma-Aldrich.
- Omyabond P100: coated, ground calcium carbonate used as filler commercialized by OMYA
- Omvalite 95T: coated, ground calcium carbonate used as filler commercialized by OMYA
- Omvacarb 10-SV: ground calcium carbonate used as filler commercialized by OMYA

### Measurements

### If not otherwise stated, all tests were performed at standard climate (23°C. 50% relative humidity)

- The **dynamic viscosity** was measured with a Brookfield DV2T EXTRA^{™} Viscometer using Spindle #6 at 5 rpm at 25°C.
- **Tensile strength, 100% modulus** and **elongation** were measured according to DIN 53504:2017-03 with Shimatzu universal testing machine AG-X plus (Extensiometer for determination of elongation at break, pneumatic clamping jaws with rubber coating, 1kN load cell, S2 test rod).
- **Lap shear strength** were measured according to DIN EN 1465:2009 Shimatzu universal testing machine AG-X plus (50kN load cell, specimen with 25 mm width, 20 mm overlap length, X mm/min test speed).
- **Recovery rate** were measured at 100% elongation and 23°C in accordance with ISO 7389 (2004-04), on anodized aluminium with a preconditioning carried out in accordance with method A of ISO 8339 (2005-06).
- **Hardness** was measured by Shore-A durometer according to ISO 868:2003 (two S2 test rods stacked).
- **Skin-over time (SOT)** was measured by filling the composition into an aluminium dish, starting a clock and slightly touching the composition surface with a wooden spatula in timed intervals. The skin-over time is the time, at which the composition has a dry, solid surface and no residual material is observable on the spatula.
- **Compositions** were mixed with a PC-Lab System Labotop mixer using a dissolver blade and beam stirrer setup. SMP, and optionally plasticizer and one part of drying agent (water scavenger) were premixed, optionally fillers were added and mixed with 2000/200 rpm at 10 mbar until a homogenous mixture was obtained. Optionally a second part of drying agent and aminosilane were added and mixed with 1000/200 rpm at 500 mbar for a short time. Compositions and combinations were cured under ambient conditions as indicated (temperature in °C, and relative humidity (RH) in %) for the SOT respectively.
- **Combinations** were prepared by mixing the curing catalyst and composition in a Hauschild DAC 400.2 VAC-P Vacuum Speedmixer at 1500 rpm and 10 mbar.

### Examples 1-6:

Examples according to the invention are examples 2-4.

Potassium neodecanoate was tested as curing catalyst with different amine compounds as co-catalysts (Table 1). Interestingly, amidines and guanidines in comparison to other amines are effective co-catalysts (example 2 DBU, example 3 DBN) or guanidines (example 4 TMG).

**Table 1: Curing tests of Si-PolyU XP 4020-1 with potassium neodecanoate with different amine compounds as co-catalyst.**

| **Example** | **1** | **2** | **3** | **4** | **5** | **6** |
|---|---|---|---|---|---|---|
| **Component** | **Parts per weight** | | | | | |
| Si-PolyU XP 4020-1 | 100 | 100 | 100 | 100 | 100 | 100 |
| TIB KAT K25 D60 | 1 | 1 | 1 | 1 | 1 | 1 |
| 1,8-Diazabicyclo[5.4.0]undec-7-ene (DBU) | | 0.153 | | | | |
| 1,5-Diazabicyclo(4.3.0)non-5-ene (DBN) | | | 0.166 | | | |
| 1,1,3,3-Tetramethylguanidine (TMG) | | | | 0.166 | | |
| N-Methylimidazole | | | | | 0.193 | |
| Laurylamine | | | | | | 0.153 |

| **Technical Data** | | | | | | |
|---|---|---|---|---|---|---|
| SOT [min] | 95 | 41 | 34 | 53 | 95 | 95 |
| Shore A after 24h | 26 | 30 | 30 | 29 | 26 | 26 |

Values for Skin-over time (SOT) are significantly lower for the combination of alkali metal carboxylate catalyst and amidine or guanidine co-catalysts than for neat alkali metal carboxylate or for the combinations of alkali metal carboxylate and amines, that are no amidines or guanidines as co-catalyst. Furthermore, hardness given as Shore-A is increased for the preferred combination of alkali metal carboxylate catalyst and amidine or guanidine co-catalysts in comparison to neat alkali metal carboxylate or for the combinations of alkali metal carboxylate and amines, that are no amidines or guanidines.

### Examples 7 to 11:

Examples according to the invention are examples 8 and 9

### Curing tests of different neodecanoate metal salts with and without presence of DBU

Different neodecanoate metal salts were tested as curing catalyst, in detail potassium, and zinc salt (Table 2). The amount of metal salt was adjusted to contain the same quantity amount of neodecanoate in mmol in the composition.

The combination of potassium carboxylate and amidine shows a SOT lower than the SOT for the combination of components a) and c) or components b) or c). In comparison zinc carboxylate in combination with amidine leads to even longer SOT than neat DBU.

**Table 2: Curing tests with Si-PolyU XP 4020-1 with different neodecanoate metal salts with and without DBU.**

| **Example** | | **7** | **8** | **9** | **10** | **11** |
|---|---|---|---|---|---|---|
| **Component** | **Carboxylate salt type** | | | | | |
| Si-PolyU XP 4020-1 | | 100 | 100 | 100 | 100 | 100 |
| TIB KAT K25 D60 | Potassium neodecanoate | | 0.9 | 0.9 | | |
| TIB KAT 616 | Zinc neodecanoate | | | | 0.53 | 0.53 |
| DBU 1,8-Diazabicyclo[5.4.0] undec-7-en | | 0.05 | | 0.05 | | 0.05 |
| n(neodecanoate) [mmol] | | 0 | 1.3 | 1.3 | 1.3 | 1.3 |
| SOT [min] at 21.6 °C/ 50.3 %RH | | 120 | 105 | 60 | >240 | 180 |

### Examples 12-23:

Examples according to the invention are examples 14, 17, 20 and 23.

### Curing tests with different silane functionalized polymers

The curing properties of potassium neodecanoate, DBU and combination of both were tested with different types of commercially available silane-modified polymers (Table 3). The combination of potassium neodecanoate and DBU show shorter curing times compared to neat compounds in respective SMPs. The invented catalyst system can be used in combination with a wide range of silane-functionalized polymers.

**Table 3: Curing tests with different types of silane-modified polymers (SMP) using potassium neodecanoate and DBU.**

| **Example** | **12** | **13** | **14** | **15** | **16** | **17** | **18** | **19** | **20** | **21** | **22** | **23** |
|---|---|---|---|---|---|---|---|---|---|---|---|---|
| **Component** | | | | | | | | | | | | |
| Si-PolyU XP 5013-1 | 100 | 100 | 100 | | | | | | | | | |
| Si-PolyU XP 4020-1 | | | | 100 | 100 | 100 | | | | | | |
| Si-PolyU XP 2550-1 | | | | | | | 100 | 100 | 100 | | | |
| STP-E 15 | | | | | | | | | | 100 | 100 | 100 |
| TIB KAT K25 D60 | 1 | | 1 | 1 | | 1 | 1 | | 1 | 1 | | 1 |
| DBU | | 0.1 | 0.1 | | 0.1 | 0.1 | | 0.1 | 0.1 | | 0.1 | 0.1 |

| **Technical Data** | | | | | | | | | | | | |
|---|---|---|---|---|---|---|---|---|---|---|---|---|
| SOT [min] | 70 | 47 | 40 | 70 | 47 | 40 | 60 | 40 | 30 | 50 | 65 | 44 |

### Examples 24-41:

Examples according to the invention are examples 25-29 and 31-41.

### Curing tests with different amounts of potassium neodecanoate and DBU - Reactivity studies

Curing tests with different amounts of potassium neodecanoate, 0.3 to 1.5 (3.3) parts per weight TIB KAT K25 D60 (potassium neodecanoate dissolved in DINCH comprising 0.09 to 0.45 (0.99) of potassium neodecanoate with and without the presence of DBU were performed (Table 4 with 0.05 parts per weight DBU, Table 5 with 0.1 parts per weight DBU).

**Table 4: Curing tests of Si-PolyU XP 4020-1 using different amounts of potassium neodecanoate with and without the presence of 0.05 parts per weight DBU. Synergy effect was determined with delta time calculations.**

| **Example** | **24** | **25** | **26** | **27** | **28** | **29** |
|---|---|---|---|---|---|---|
| **Component** | | | | | | |
| Si-PolyU XP 4020-1 | 100 | 100 | 100 | 100 | 100 | 100 |
| TIB KAT K25 D60 | 0 | 0.3 | 0.6 | 0.9 | 1.2 | 1.5 |
| amount potassium neodecanoate | 0 | 0.09 | 0.18 | 0.27 | 0.36 | 0.45 |

| **Technical Data without DBU** | | | | | | |
|---|---|---|---|---|---|---|
| SOT [min] | | 200 | 135 | 90 | 63 | 52 |
| Shore A after 24h | | 10 | 22 | 24 | 31 | 35 |
| **+ DBU** | **0.05** | **0.05** | **0.05** | **0.05** | **0.05** | **0.05** |

| **Technical Data with DBU** | | | | | | |
|---|---|---|---|---|---|---|
| SOT [min] | 82 | 73 | 62 | 53 | 46 | 40 |
| Shore A after 24h | 32 | 32 | 33 | 35 | 36 | 36 |
| Time Delta between with and without DBU | - | 127 | 73 | 37 | 17 | 12 |
| Time Delta compared to example without K25 | - | 9 | 20 | 29 | 36 | 42 |

**Table 5: Curing tests of Si-PolyU XP 4020-1 using different amounts of potassium neodecanoate with and without the presence of 0.1 parts per weight DBU**

| **Example** | **30** | **31** | **32** | **33** | **34** | **35** | **36** | **37** | **38** | **39** | **40** | **41** |
|---|---|---|---|---|---|---|---|---|---|---|---|---|
| **Component** | **Parts per weight** | | | | | | | | | | | |
| Si-PolyU XP 4020-1 | 100 | 100 | 100 | 100 | 100 | 100 | 100 | 100 | 100 | 100 | 100 | 100 |
| TIB KAT K25 D60 | 0 | 0.3 | 0.6 | 0.9 | 1.2 | 1.5 | 1.8 | 2.1 | 2.4 | 2.7 | 3.0 | 3.3 |
| amount potassium neodecanoate | 0 | 0.09 | 0.18 | 0.27 | 0.36 | 0.45 | 0.54 | 0.63 | 0.72 | 0.81 | 0.9 | 0.99 |
| DBU | 0.1 | 0.1 | 0.1 | 0.1 | 0.1 | 0.1 | 0.1 | 0.1 | 0.1 | 0.1 | 0.1 | 0.1 |

| **Technical Data** | | | | | | | | | | | | |
|---|---|---|---|---|---|---|---|---|---|---|---|---|
| SOT [min] | 36 | 36 | 35 | 30 | 28 | 26 | 25 | 23 | 21 | 20 | 18 | 17 |

### Examples 42 to 53:

Examples according to the invention are examples 50-53.

### Curing tests with different amounts of potassium neodecanoate and DBU in a curable composition

Since the reactivity studies were done as combinations with neat SMP without any additives and filler, the reactivity of potassium neodecanoate, DBU and combination of both were also tested in a composition, (Table 6).

Similar effects in the curing performance can also be observed for a composition comprising the combination of alkali metal carboxylate and amidine as can be told by the values for SOT which are significantly lower for the composition comprising the combination of potassium neodecanoate and DBU as for the composition comprising neat potassium neodecanoate or neat DBU without co-catalyst respectively.

**Table 6: Curing tests of Si-PolyU XP 2550-1 in a curable composition using different amounts of potassium neodecanoate, DBU and combination of both**

| **Example** | **42** | **43** | **44** | **45** | **46** | **47** | **48** | **49** | **50** | **51** | **52** | **53** |
|---|---|---|---|---|---|---|---|---|---|---|---|---|
| **Component** | **Parts per weight** | | | | | | | | | | | |
| Si-PolyU XP 2550-1 | 30 | 30 | 30 | 30 | 30 | 30 | 30 | 30 | 30 | 30 | 30 | 30 |
| PPG1000 | 14 | 14 | 14 | 14 | 14 | 14 | 14 | 14 | 14 | 14 | 14 | 14 |
| AMMO | 0.4 | 0.4 | 0.4 | 0.4 | 0.4 | 0.4 | 0.4 | 0.4 | 0.4 | 0.4 | 0.4 | 0.4 |
| Omyabond P100 | 54 | 54 | 54 | 54 | 54 | 54 | 54 | 54 | 54 | 54 | 54 | 54 |
| VTMO | 1 | 1 | 1 | 1 | 1 | 1 | 1 | 1 | 1 | 1 | 1 | 1 |
| TIB KAT K25 D60 | | | | | 0.6 | 1.2 | 2.4 | 3 | 0.6 | 1.2 | 2.4 | 3 |
| DBU | 0.1 | 0.2 | 0.3 | 0.4 | | | | | 0.1 | 0.1 | 0.1 | 0.1 |

| **Technical Data** | | | | | | | | | | | | |
|---|---|---|---|---|---|---|---|---|---|---|---|---|
| SOT [min] at | 78 | 40 | 27 | 20 | 120 | 55 | 33 | 25 | 50 | 33 | 24 | 20 |

### Examples 54-57:

Example according to the invention is example 57.

### Curing tests as comparison between DOTL (reference) and potassium neodecanoate, DBU and combination of both in a composition

The invented catalytic system was compared to dioctyl dilaurate (DOTL) dissolved in DINCH (table 7). The combination of component a) comprising at least one alkali metal carboxylate, preferably potassium neodecanoate, and component b) comprising at least one amidine and/or guanidine, preferably DBU, can be adjusted easily to achieve similar SOT like DOTL while keeping the needed amount of compounds at a moderate level.

**Table 7: Comparison of curing between DOTL (reference) and potassium neodecanoate, DBU and combination of both using a composition based on Si-PolyU XP 4020-1**

| **Example** | **54** | **55** | **56** | **57** |
|---|---|---|---|---|
| **Components** | **Parts per weight** | | | |
| Si-PolyU XP 4020-1 | 25 | 25 | 25 | 25 |
| DINP | 13 | 13 | 13 | 13 |
| AMMO | 0.95 | 0.95 | 0.95 | 0.95 |
| Omyalite 95T | 30 | 30 | 30 | 30 |
| Omyacarb 10-SV | 30 | 30 | 30 | 30 |
| VTMO | 0.95 | 0.95 | 0.95 | 0.95 |
| TIB KAT K25 D60 | | 0.3 | | 0.27 |
| DBU | | | 0.03 | 0.03 |
| DOTL, 20% | 0.3 | | | |

| **Technical Data** | | | | |
|---|---|---|---|---|
| SOT [min] | 45 | > 120 | 90 | 45 |

### Examples 58 to 61:

Example 59 is according to the invention

### Technical data of composition using DOTL, potassium neodecanoate, DBU and combination of both as curing catalyst

Technical data of compositions based on Si-PolyU XP 2550-1 are compared for different catalytic systems (Table 8).

The amount of catalyst components a) and b) and the combination comprising components a) and b) were adjusted to lead to similar SOT as for the composition comprising DOTL. The results show the high amount of needed single compounds, that is approximately two times higher (examples 61 and 62), compared to the combination of component a) and b) (example 60) in order to facilitate a curing performance comparable to compositions comprising DOTL.

The storage stability of a composition containing potassium neodecanoate/DBU combination is comparable to a composition containing DOTL as indicated by the viscosity measurements over time.

**Table 8: Technical data of curable composition based on Si-PolyU XP 2550-1 using as curing catalyst DOTL (reference), potassium neodecanoate, DBU and combination of both while keeping the same skin-over time.**

| **Example** | **58** | **59** | **60** | **61** |
|---|---|---|---|---|
| **Component** | **Parts per weight** | | | |
| Si-PolyU XP 2550-1 | 30 | 30 | 30 | 30 |
| PPG1000 | 14 | 14 | 14 | 14 |
| AMMO | 0.4 | 0.4 | 0.4 | 0.4 |
| Omyabond P100 | 54 | 54 | 54 | 54 |
| VTMO | 1 | 1 | 1 | 1 |
| TIB KAT K25 D60 | | 1.2 | | 2.4 |
| DBU | | 0.1 | 0.25 | |
| DOTL 20% | 1 | | | |

| **Technical Data** | | | | |
|---|---|---|---|---|
| SOT [min] | 33 | 34 | 33 | 30 |
| TB [MPa] | 2.3 | 2.8 | 2.3 | 3 |
| TS 100 [MPa] | 0.45 | 0.4 | 0.52 | 0.33 |
| Elongation [%] | 977% | 1141% | 855% | >1150% |
| LSS H/Alu [MPa] | 1.5 | 1.4 | Not determined | |
| LSS H/PVC [MPa] | 1.2 | 1 | | |
| Initial viscosity [Pas] | 411 | 563 | | |
| Viscosity after storage of 1 week at 50°C [Pas] | 508 | 607 | | |
| Viscosity after storage of 2 week at 50°C [Pas] | 620 | 720 | | |
| Viscosity after storage of 3 week at 50°C [Pas] | 1040 | 1193 | | |

### Examples 62-73:

Examples according to the invention are examples 63, 67, 71 and 73.

### Technical data comparison between DOTL (reference) and potassium neodecanoate, DBU and combination of both as curing catalyst using a curable composition based on different SMPs.

The curing reactivity in curable compositions (table 9) show similar results to combinations with neat SMPs.

Recovery rate (as an elastic measure of the extend to which a specimen regains its original dimensions after release of an imposed strain) is improved in the combination of potassium neodecanoate with DBU compared to neat DBU. Hence, a value comparable with that of a composition cured with DOTL can be achieved.

The results surprisingly indicate that the adhesion of compositions comprising only neat potassium neodecanoate is lower than the adhesion of those compositions comprising a combination with DBU as summarized in table 9 by adhesion fracture (AF) and cohesion fracture (KF) and lap shear strength values in MPa.

**Table 9: Technical data comparison between DOTL (reference) and potassium neodecanoate, DBU and combination of both as curing catalyst using a curable composition based on different SMPs.**

| **Example** | **63** | **64** | **65** | **66** | **67** | **68** | **69** | **70** | **71** | **72** | **73** | **74** |
|---|---|---|---|---|---|---|---|---|---|---|---|---|
| **Component** | **Parts per weight** | | | | | | | | | | | |
| Si-PolyU XP 2550-1 | 30 | 30 | 30 | 30 | | | | | | | | |
| STP-E 35 | | | | | 30 | 30 | 30 | 30 | | | | |
| SAX 520 | | | | | | | | | 30 | 30 | | |
| S203H | | | | | | | | | | | 15 | 15 |
| S303H | | | | | | | | | | | 15 | 15 |
| PPG1000 | 14 | 14 | 14 | 14 | 14 | 14 | 14 | 14 | 14 | 14 | 14 | 14 |
| AMMO | 0.4 | 0.4 | 0.4 | 0.4 | 0.4 | 0.4 | 0.4 | 0.4 | 0.4 | 0.4 | 0.4 | 0.4 |
| Omyabon d P100 | 54 | 54 | 54 | 54 | 54 | 54 | 54 | 54 | 54 | 54 | 54 | 54 |
| VTMO | 1 | 1 | 1 | 1 | 1 | 1 | 1 | 1 | 1 | 1 | 1 | 1 |
| DOTL, 20% | 1 | | | | 1 | | | | 1 | | | |
| Sn(acac) Bu2, 20% | | | | | | | | | | | 1 | |
| TIB KAT K25 D60 | | 1.2 | | 1.2 | | 1.2 | | 1.2 | | 1.2 | | 1.2 |
| DBU | | 0.1 | 0.1 | | | 0.1 | 0.1 | | | 0.1 | | 0.1 |

| **Technical Data** | | | | | | | | | | | | |
|---|---|---|---|---|---|---|---|---|---|---|---|---|
| SOT [min] | 38 | 38 | 73 | 65 | 28 | 47 | 120 | 50 | 33 | 120 | 420 | 210 |
| TB [MPa] | 2.5 | 3.2 | 2.9 | 3 | 1.37 | 1.37 | 1.53 | 1.36 | 2.34 | 1.99 | 2.11 | 1.93 |
| TS100 [MPa] | 0.43 | 0.33 | 0.45 | 0.35 | 0.83 | 0.7 | 0.99 | 0.7 | 0.52 | 0.43 | 0.34 | 0.3 |
| Elongation (max) [%] | 994 | 1203 | 1170 | 1111 | 554 | 661 | 551 | 607 | 961 | 949 | 1049 | 1060 |
| Recovery Rate [%] | 75 | 75 | 63 | 83 | KF* | AF* | KF* | AF* | 88 | 89 | 59 | 78 |
| Modul 100% (HBlock) [MPa] | 0.46 | 0.36 | 0.53 | 0.38 | 0.96 | 0.71 | 1.12 | 0.72 | 0.56 | 0.45 | 0.31 | 0.3 |
| LSS AI/AI [MPa] | 1.8 | 1.4 | 1.4 | 1 | 1.7 | 1.7 | 2.2 | 1.3 | 2.1 | 1.3 | 1.2 | 1.3 |
| fracture pattern | KF | KF | KF | AF | KF | AF | KF | AF | KF | KF | KF | KF |
| LSS AI/PVC [MPa] | 1.4 | 1.1 | 1.6 | 0.9 | 1.4 | 1.1 | 1.5 | 1.1 | 1.9 | 1.4 | 1.3 | 1.4 |
| fracture pattern | KF | AF | KF | AF | AF/ KF | AF | AF | AF | KF | KF | KF | AF |

| | | | | | | | | | | | | |
|---|---|---|---|---|---|---|---|---|---|---|---|---|
| *break before 100% elongation | | | | | | | | | | | | |

## Claims

1. Combination of
component a) comprising at least one alkali or alkaline earth metal carboxylate component b) comprising at least one amidine and/or guanidine.

2. Combination according to claim 1, **characterized in that** the weight ratio of component a), preferably of the at least one alkali or alkaline earth metal carboxylate, to component b), preferably to the at least one amidine and/or guanidine, is 25:1 to 1:25, preferably 20:1 to 1:1, more preferably 10:1 to 3:2, most preferably 15:2 to 5:2.

3. Combination according to any of the previous claims, **characterized in that** the anion of the alkali or alkaline earth metal carboxylate in component a) is a conjugated base of a hydrocarbon-substituted carboxylic acid, more preferably featuring at least one tertiary or quaternary carbon atom.

4. Combination according to claim 3, **characterized in that** the carboxylic acid is selected from the group consisting of octylic acid, 2-ethylhexanoic acid, neodecanoic acid, oleic acid, pivalic acid, 2,2-dimethylbutanoic acid, 2,2-dimethylpentanoic acid, and naphthenic acid, preferably 2-ethylhexanoic acid, pivalic acid and neodecanoic acid, most preferably neodecanoic acid or pivalic acid.

5. Combination according to claim 3, **characterized in that** the carboxylic acid has a tertiary or quaternary α-carbon atom, preferably a quaternary α-carbon atom.

6. Combination according to claim 3 or 5, **characterized in that** the carboxylic acid is a tertiary carboxylic acid, preferably a trialkyl acetic acid, more preferably selected from the group of neodecanoic acid, pivalic acid, 2,2-dimethylbutanoic acid and 2,2-dimethylpentanoic acid.

7. Combination according to claims 3 to 6, **characterized in that** the carboxylic acid comprises 5 to 20 carbon atoms, preferably 5 to 15 carbon atoms, more preferably 5 to 12 carbon atoms, most preferably 5 to 10 carbon atoms.

8. Combination according to any of the previous claims, **characterized in that** component a) comprises at least one alkali metal carboxylate, preferably a potassium carboxylate, more preferably potassium neodecanoate and/or potassium pivalate.

9. Combination according to any of the previous claims, **characterized in that** component b) comprises at least one cyclic amidine or bicyclic amidine, pereferably a bicyclic amidine, more preferably selected from the group consisting of 1,8-Diazabicyclo[5.4.0]undec-7-en (DBU) and 1,5-Diazabicyclo [4.3.0]non-5-en (DBN) and 1,5-diazabicyclo[4.4.0]dec-5-ene (DBD), most preferably 1,8-Diazabicyclo[5.4.0]undec-7-en (DBU).

10. Combination according to any of the previous claims, **characterized in that** component a) comprises potassium neodecanoate and/or potassium pivalate and component b) comprises at least one amidine, preferably cyclic amidine or bicyclic amidine, more pereferably a bicyclic amidine, most preferably selected from the group consisting of 1,8-Diazabicyclo[5.4.0]undec-7-en (DBU) and 1,5-Diazabicyclo[4.3.0]non-5-en (DBN) and 1,5-diazabicyclo[4.4.0]dec-5-ene (DBD).

11. Combination according to claim 10, **characterized in that** the weight ratio of potassium neodecanoate and/or potassium pivalate to amidine is 25:1 to 1:25, preferably 20:1 to 1:1, more preferably 10: 1 to 3:2, most preferably 15:2 to 5:2.

12. Combination according to claims 1 to 8, **characterized in that** component b) comprises at least one guanidine, pereferably an alkylated guanidine, more preferably a tetraalkylated guanidine, most preferably 1,1,3,3-Tetramethylguanidine (TMG).

13. Combination according to claims 1 to 8, **characterized in that** component b) comprises at least one cyclic or bicyclic guanidine, preferably selected from the group consisting of 1,5,7-triazabicyclo[4.4.0]dec-5-ene (TBD) and 7-methyl-1,5,7-triazabicyclo[4.4.0]dec-5-ene (Me-TBD).

14. Combination according to claims 12 or 13, **characterized in that** component a) comprises potassium neodecanoate and/or potassium pivalate and component b) comprises at least one guanidine, pereferably an alkylated guanidine, more preferably a tetraalkylated guanidine, most preferably 1,1,3,3-Tetramethylguanidine (TMG).

15. Combination according to claim 14, **characterized in that** the weight ratio of potassium neodecanoate and/or potassium pivalate to guanidine is 25:1 to 1:25, preferably 20:1 to 1:1, more preferably 10:1 to 3:2, most preferably 15:2 to 5:2.

16. Combination according to any of the previous claims, **characterized in that** it additionally comprises component c) comprising at least one silane functionalized polymer.

17. Combination according to claim 16, **characterized in that** it comprises 0.05 - 1.0 parts per weight of component a), 0.005 - 0.2 parts per weight of component b) and 5 - 100 parts per weight of component c).

18. Combination according to claims 16 or 17, **characterized in that** component c) comprises at least one silane functionalized polymer which is preferably moisture curing, wherein the silane-functionalized polymer comprises an n-valent polymeric backbone Y and n groups according to formula (I):
-Si(R₄)ₚ(OR₅)₃₋ₚ) (I)
wherein
- R⁴ is a linear or branched monovalent hydrocarbon radical having 1 to 10 carbon atoms, more preferably methyl or ethyl;
- R⁵, identical or different, represents each an acyl radical, or a linear or branched, monovalent hydrocarbon radical having 1 to 10 carbon atoms, preferably from 1 to 5 carbon atoms, more particularly R⁵ being methyl or ethyl;
- or two radicals R⁵ may form a cycle;
- p is 0, 1 or 2, preferably 0, and
- Y is preferably selected from the group consisting of polyether, polyetherpolyol, polyester, poly(ether-ester), polyolefin, polycaprolactone, polycarbonate, poly(ether-carbonate), poly(meth)acrylate, polyacetal, polythioether and polyurethane, more preferably polyether polyol or polyurethane, most preferably polyurethane,
- n is an integer, preferably between 1 and 4, more preferably, 2 or 3, most preferably 2.

19. Combination according to claims 16 to 18, **characterized in that** component a) comprises potassium neodecanoate and/or pivalate and component b) comprises at least one guanidine and/or amidine and component c) comprises at least one silane functionalized polymer, preferably as defined in claim 18.

20. Combination according to claims 16 to 19, **characterized in that** component a) comprises potassium neodecanoate and component b) comprises at least one cyclic amidine or bicyclic amidine, pereferably a bicyclic amidine, more preferably selected from the group consisting of 1,8-Diazabicyclo[5.4.0]undec-7-en (DBU) and 1,5-Diazabicyclo[4.3.0]non-5-en (DBN), 1,5-diazabicyclo[4.4.0]dec-5-ene (DBD), most preferably 1,8-Diazabicyclo[5.4.0]undec-7-en (DBU) and component c) comprises at least one silane functionalized polymer, preferably as defined in claim 18.

21. Combination according to claims 16 to 20, **characterized in that** component a) comprises potassium neodecanoate, component b) comprises at least one guanidine, pereferably an alkylated guanidine, more preferably a tetraalkylated guanidine, most preferably 1,1,3,3-Tetramethylguanidine and component c) comprises at least one silane functionalized polymer, preferably as defined in claim 18.

22. Curable composition comprising component a), component b) and component c), each defined according to any of the previous claims.

23. Curable composition according to claim 22 **characterized in that** it comprises 0.05 - 1.0 parts per weight, preferably 0.05 - 0.5 parts per weight of component a), preferably of at least one alkali or earth alkali metal carboxylate, more preferably potassium carboxylate, most preferably potassium neodecanoate and/or potassium pivalate,
0.005 - 0.2 parts per weight, preferably 0.01 to 0.1 parts per weight of component b), preferably at least one amidine and/or guanidine, more preferably 1,8-Diazabicyclo[5.4.0]undec-7-en, and
5 - 100 parts per weight, preferably 5 - 60 parts per weight of component c) comprising at least one silane functionalized polymer, preferably as defined in claim 18.

24. Curable composition according to claim 22 or 23 **characterized in that** the weight ratio of component a) to component b), preferably of the at least one alkali or earth alkali metal carboxylate to the at least one amidine and/or guanidine is 25:1 to 1:25, preferably 20:1 to 1:1, more preferably 10:1 to 3:2, most preferably 15:2 to 5:2.

25. Curable composition according to claims 22 to 24, **characterized in that** it further contains at least one additive for example chosen from the group consisting of pigments, dyes, adhesion promoters, solvents, drying agents, anti-oxidant, wetting-agents, UV absorber, reactive diluent, thixotropic agents, fillers, plasticizers, and mixtures thereof.

26. Curable composition according to claims 22 to 25, **characterized in that** it comprises ≤ 0.1 % by weight of amidine, preferably 0.05 to 0.1 by weight of amidine, preferably of 1,8-Diazabicyclo[5.4.0]undec-7-en (DBU).

27. Process for curing a silane functionalized polymer comprising the steps of providing a combination of component a) and b) as defined in any of the claims 1 to 15, contacting said combination to component c) as defined in any of the claims 16 to 21 and exposing said combination of component a), b) and c) to water, preferably to moisture, thereby obtaining a cured silane functionalized polymer.

28. Process for curing a curable composition as defined according to claims 22 to 26 comprising the steps of
providing a combination of component a) and b) as defined in any of the claims 1 to 15, contacting said combination to component c) as defined in any of the claims 16 to 21 and exposing said combination of component a), b) and c) to water, preferably to moisture, thereby obtaining a cured composition.

29. Use of a combination of component a) and b) as defined according to any of the claims 1 to 15 for curing of silane functionalized polymers, preferably as defined in claim 18.

30. Use of a combination of component a) and b) as defined according to any of the claims 1 to 15 for curing of a composition as defined according to claims 22 to 26.
